Europäisches Patentamt

European Patent Office

Office européen des brevets

(11) Publication number: **0 305 973**
**A1**

## (12) EUROPEAN PATENT APPLICATION

(21) Application number: 88114142.8

(51) Int. Cl.⁴: **C12H 1/16**

(22) Date of filing: 30.08.88

(30) Priority: 31.08.87 CN 87105894

(43) Date of publication of application:
08.03.89 Bulletin 89/10

(84) Designated Contracting States:
FR GB IT

(71) Applicant: Yu, Qi-Hai
301, 3rd Building Gangzhongcun Hefei Iron
and Steel Company
Hefei Anhui Province(CN)

(72) Inventor: Yu, Qi-Hai
301, 3rd Building Gangzhongcun Hefei Iron
and Steel Company
Hefei Anhui Province(CN)

(74) Representative: von Füner, Alexander, Dr. et al
Patentanwälte v. Füner, Ebbinghaus, Finck
Mariahilfplatz 2 & 3
D-8000 München 90(DE)

(54) **Technology and equipment using interfacing method for the aging of alcoholic beverages.**

(57) The present invention relates to technology and equipment using interfacing method for the aging of alcoholic beverages which provide a highly effective, practical and simple way and the equipment for the artificial aging of alcoholic beverages. It deliberately increases the contact surface of molecules , atoms and electrons participating in the aging activity , augments the available zones for aging activity and enhances the available integrating effects of the aging process , so that maximal aging effect can be attained in relatively short time periods with the same effect as natural aging. The equipment of the present invention comprises essentially a containing vessel and a body of interfacing elements , auxiliary apparatus can also be incorporated. The treatment of alcoholic beverages using this equipment for several hours to more than ten days can have the effect equivalent to a natural aging process of 3-5 years , with improvements in color, aroma, flavor and style. Treated cognacs such as brandy can have equivalent effects of more than 10 years of natural aging , which enables the wine factories to approach an aging effect of scores of years.

**FIG.1**

## Technology and Equipment Using Interfacing Method for the Aging of Alcoholic Beverages

The technical field of the present invention relates to the technology for the aging of alcoholic beverages.

As is well known, various newly distilled alcoholic beverages do not appeal to the palate. The usual practice is to naturally age the alcoholic beverage for several years so that it possesses satisfactory indices for the sensory organs. For instance , the famous Chinese liquor Xi-feng has to be stored for natural aging for 3 years. Mao-tai Liquor requires 3-5 years , and some of the French cognac varieties are said to have been aged for a century. In recent years various methods for artificially accelerating the aging of alcoholic beverages have been introduced abroad , using such auxiliary means as laser, micro-wave, irradiation , infra-red rays , ultra-violet rays , refrigeration, heating , ultrasonic devices , adsorption , additives, magnetization, etc. The reported aging effect for liquors is equivalent to two months to one year of aging. Take the micro-wave aging machine marketed in recent years as an example , low quality liquors treated with this machine will have an aging effect equivalent to 2-3 month's storage, only that a few days after treatment it will gradually revert to its original status. Moreover , this machine will have no effect on liquors of superior quality. Besides , this machine is based on highly sophisticated technology and its parts fail easily , and is thus not readily received by distilleries. Also , the 'biochemical' method currently under development in this country requires , as is so reported , a process of preliminary natural aging of half a year , then the products are obtained by appropriate blending. The greatest difficulty with this method , however, lies in that when the liquor has an alcohol content higher than 16% it will be germicidal , and it is very difficult to find bacteria which can survive in a distilled liquor. Hence the aging technology , as is well recognized , is a problem which the wine-making trade has long sought to tackle and which has not yet been satisfactorily solved , the essence of the issue is that there lacks a kind of machinery or equipment which will really and effectively replace the process of natural aging in alcoholic beverages.

The objective of this invention is to provide an effective and practical method for the artificial aging of alcoholic beverages and the equipment used for such.

The concept of the present invention has its basis in the principles of surface physics. It makes use of the specific condition that in the micro-structure of the surface layer of the containing vessel there is free space on one side of the array of atoms, that is to say, there is mobility and activity of the atoms in the surface layer , and the molecules , atoms and electrons of the surface layer directly take part in and promote the process of oxidation, reduction and lipidization and the process of polymerization, condensation and association of molecules. This makes a feature of the aging activity at the boundary layer being much faster than that in the depth of the liquid. Thus by artificially creating a system of promoted surface activity , by deliberately increasing the number of molecules , atoms and electrons taking part in the activation of the aging process of the alcoholic beverage , by enlarging the zones of aging activity and by enhancing the integrating effect of this activity , it is striven to attain the maximal aging effect within a short period, so that the time for natural aging can be compressed into the shortest period to eventually attain the objective of a highly effective aging.

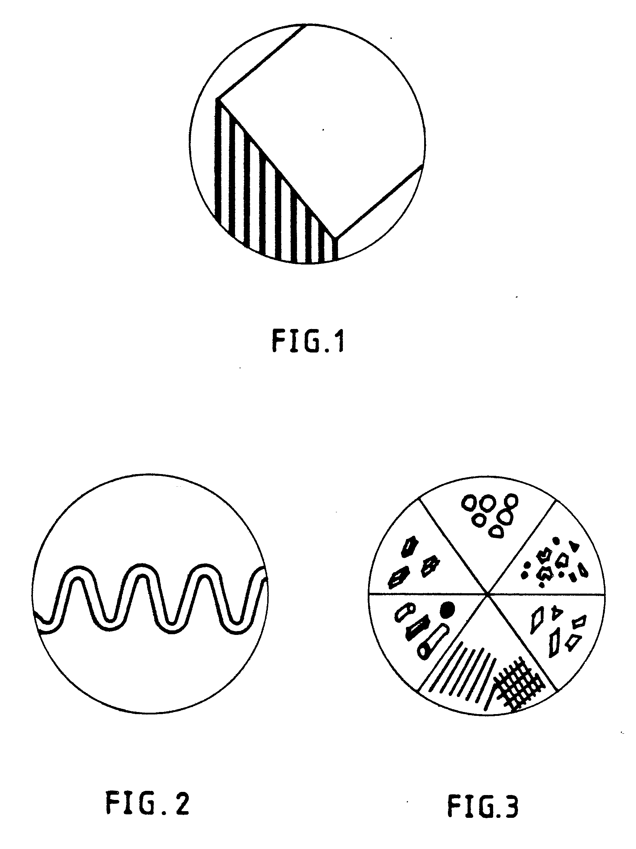

To realize the method of the present invention , an equipment for the aging of alcoholic beverages is devised. It comprises essentially a containing vessel and a body of increased interface for solid-liquid contact. The containing vessel can be of any arbitrary shape , preferably of a cylindrical configuration ; its external dimensions are to be specifically selected in accordance with the quantity of liquid it is to be held. The containing vessel can be made of glass , stone , ceramic , enamel , cement , metal and other inorganic materials suitable for holding edible liquids. In order to increase the contact surface between the liquid and solid so as to enhance the aging effect , a multitude of interfacing elements are to be piled or arrayed in the containing vessel in an arbitrary manner. The liquid can also be directly introduced into the interfacing elements which can be of the form of tube coils or radiator elements as is shown in Figs. 1 and 2 such that the aging effect is attained by carrying out the aging process solely in the intefacing elements , dispensing with the external liquid containing vessel. The interfacing elements can be of the form of plates , cubes, slabs, wires, nets, ribbons, tubes, rings, spheres or of irregular shapes, and a multitude of such elements are stacked or arrayed in the containing vessel as is shown in Fig. 3. The materials for fabricating these elements can be those of the above mentioned materials for making the containing vessel. The objective of using such elements is to augment the contact surface of the solid matter in the containing vessel with the liquid so that the aging process can be enhanced. Experiments have shown that the greater the specific surface , the more pronounced will be the aging effect. Although the equipment used in the method of the present invention is very simple , it has never been used in the technology for the aging of alcoholic beverages. The procedure of the aging treatment is simple and requires to place the newly distilled

2

alcoholic beverage in the said equipment, the duration of treatment should vary with the age , quality and sort of alcoholic beverage , for the completion of the treatment it can be as brief as several seconds or as long as more than ten days.

To make the aging treatment more effective, certain measures can be taken by the inclusion of certain supplementary means to accelerate the aging process, such as means to additionally produce movement or vibration in the interfacing elements , or by the use of , for instance , a pump or stirrer to produce a recirculation or stirring of the alcoholic beverage. Supplementary means can also be provided to increase the possibility of contact and collision between the molecules , atoms and electrons of the alcoholic beverage and those of the interfacing elements by the micro kinetic energy of sonic , optic , electric sources and magnetic field to promote the aging process by further activating the collision , association and other actions of the molecules within the alcoholic beverage. Electrodes , for instance , can be inserted in the containing vessel , or the metallic parts such as the shell of the metallic vessel or the metallic interfacing elements can also be directly used as electrodes. The voltage applied can be in the range of zero to a 200,000 volts. Experiments have shown that with a voltage of 20 ,000 , 180 or 2 volts or scores of millivolts , optimal effects can be attained. The current flowing through the circuit is preferably between 0.1 microampere and 1 ampere.

Brief Description of the Drawing:

Fig. 1 to Fig. 3 are sketches of the interfacing elements, wherein:

Fig. 1 is a sketch showing insterfacing elements of a checkered plate form:

Fig. 2 is a sketch showing an insterfacing element in the form of a coil or a curvilinear plate;

Fig. 3 is a sketch showing interfacing elements of spherical , cubical, annular , linear , netted and irregular shapes.

A new way is opened up for the artificial aging of alcoholic beverages by the method and equipment of the present invention, which will considerably curtail the period of production of alcoholic beverages and will save the storehouse space for natural aging , the containers for holding the aging alcoholic beverage and the floor space they occupy. Various newly distilled alcoholic beverages undergoing an aging treatment by the method and equipment of the present invention for several hours to more than ten days will have the same effect of 3-5 years of natural aging and will have improved quality in color, aroma , flavor and characteristic style , the effects are more pronounced for high quality alcoholic beverages. For instance , the aging effect for brandy can be equivalent to more than ten years of natural aging. In using the method and equipment of the present invention , no other substances are added , and except with the containing vessel, the alcoholic beverages do not come into contact with any substance or irradiation, not much energy is to be consumed, and it does not cause pollution of the environment. The sensory organ and physico-chemical indices (acid , lipid, alcohol, aldehyde, Pb, Fe, Cu, Mn, Zn and pH value , etc. ) have the same changing tendencies as in natural aging.

Also the effects of aging are reliable and stable. Follow-up studies have been conducted continuously for five years and no reversion has been traced. During the treatment the loss of the alcoholic beverage is less than 1/10-1/1000 of that with natural aging process. The method and equipment of the present invention are applicable to the aging of alcoholic beverages , also the same effect as natural aging can be attained with soya bean sauce, vinegar, etc. To alleviate the repeated manual manipulation in the treatment procedures, devices for programmed control can be incorporated for the control of aging process for future betterment.

Some examples of the effect of using the method and the basic equipment of the present invention in the treatment of various alcoholic beverages after 2-10 days of treatment are given below:

Exampel 1 :

The appraisal report of a treated product from an intermediate trial facility (quantity of liquor treated was augmented 100 times that of the previous laboratory scale trials ) of Hefei distillery , with the participation of liquor tasters of provincial standing:

Record of liquor appraisal by Hefei distillery

| Item | color (10) | Aroma (25) | Flavor (50) | Style (15) | Comments | Total score | Ranking | Note |
|---|---|---|---|---|---|---|---|---|
| 1 | 10 | 20 | 42 | 14 | Clear and transparent, aroma slightly short of pure, relatively mellow and sweet, slightly pungent,passable residual flavor | 86 | 3 | Treated, Trial BB |
| 2 | 10 | 20 | 41 | 13 | Clear and transparent, has the aroma of newly distilled liquor,sharply pungent, slightly sweet,passable residual flavor | 84 | 4 | Untreated li-quor |
| 3 | 10 | 23 | 44 | 14 | Clear and transparent, pure and genuine aroma, refreshing, relatively sweet and mellow, relatively refreshing residual flavor, relatively well coordinated liquor style | 91 | 2 | Treated, Trial B |
| 4 | 10 | 22 | 45 | 14 | Clear and transparent, relatively pure and genuine aroma, mellow and sweet, relatively soft, well coordinated liquor style, lasting and refreshing residual flavor | 91 | 1 | Treated, Trial C |

( Rules for liquor tasting : 1. No exchange of opinon during tasting ; 2. No smoking during tasting ; 3. Discussion is allowed after scores have been recorded ; 4. The sources of samples will be disclosed at last , then discussions and reappraisal will be held.)

It can be seen from the above table that liquor treated with the method of the present invention got the highest score of 91 , while the untreated original liquor only got 84, which indicates the marked effect of the aging effect.

Example 2 :

Reports of appraisal and analysis of Tai-bai hard liquor and Jingchuan hard liquor treated with the method of the present invention and subsequently stored for one year, which were consigned to Hefei Distillery for appraisal with the participation of liquor tasters of provincial standing;

Report of liquor appraisal by Hefei Distillery

| Item | color (10) | Aroma (25) | Flavor (50) | Style (15) | Comments | Total score | Note |
|------|-----------|-----------|------------|-----------|----------|-------------|------|
| 1 | 10 | 22 | 43 | 14 | Clear and transparent, aroma pure and genuine, relatively matured and concentrated, tastes sweet, mellow and strong, slightly puckery, refreshing and relatively palatable residual flavor, typical style of hard liquor | 89 | Treated |
| 2 | 10 | 20 | 40 | 13 | Clear and transparent, aroma lacks mellowness but relatively pure and genuine, tastes mellow and slightly puckery, slightly pungent residual flavor, some feeling of new liquor | 83 | Untreated |
| 3 | 10 | 21 | 41 | 14 | Clear and transparent, aroma slightly assimilates to sesame, relatively pure and genuine, tastes mellow, sweet and refreshing, slightly puckery, style quite unique | 86 | Treated |
| 4 | 10 | 20 | 38 | 13 | Clear and transparent, aroma lacks pureness and feels newer than Sample 3, tastes slightly sweet, pungent, slightly bitter residual flavor | 81 | Untreated |

Report of chemical analysis

| Sample / Item | Jing-chuan hard liquor | | Hard liquor produced by Tai-bai Distillery in Ma'anshan City | |
|---------------|-----------|------------|-----------|------------|
| | treated | untreated | treated | untreated |
| Total acid | 0.1452 | 0.1536 | 0.1596 | 0.1680 |
| Total lipid | 0.4805 | 0.4400 | 0.5632 | 0.5474 |

The results in the tables show that there was no phenomenon of reversion , the effects were stable and the total lipid content had a tendency of rising.

Exmple 3 :

This is a report of appraisal of aging-treated Longxian Red Wine by a joint appraisal team of wine organized by nine organizations including Baoji Municipal Commission of Science , Baoji Municipal Association of Foodstuffs, etc.

Score table of wine appraisal by Longxian Wine Factory

| Item / Sample number | Color (10) | Aroma (25) | Flavor (50) | Style (15) | Total score (100) | Comments |
|---|---|---|---|---|---|---|
| 1 (treated) | 10 | 24 | 46 | 12 | 92 | Outstanding fruit aroma , well coordinated style,puckery and slightly bitter residual flavor |
| 2 (treated) | 10 | 23 | 47 | 14 | 94 | Outstanding fruit aroma, well coordinated style, refreshing flavor, lasting residual flavor |
| 3 (untreated) | 8 | 21 | 36 | 12 | 77 | Has fruit aroma, not so well coordinated style,light residual flavor |

Example 4 :

This is the report of appraisal of a high quality liquor produced by Hefei Distillery and treated with the method of the present invention. It can be seen that the quality of the liquor was further improved to a large extent.

Score table of liquor appraisal by Hefei Distillery

| Item / Sample | Color (10) | Aroma (25) | Flavor (50) | Style (15) | Total score (100) | Comments |
|---|---|---|---|---|---|---|
| Untreated sample of Hefei Special Liquor | 10 | 22 | 45 | 14 | 91 | Clear and transparent,rather heavy aroma, flavor pure, mellow and sweet, slight pungent residual flavor, after-taste lasts a while, relatively coordinated style |
| Treated sample of Hefei Special Liquor | 10 | 24 | 47 | 15 | 96 | Clear and transparent, strongly fragrant, flavor pure and softly sweet and mellow, lasting after-taste, well coordinated style |

The above samples were subjected to analyses by a gas chromatograph , the results showed that the treated liquor not only changes the reactions of the sensory organs , but the micro-constituents in its

6

physico-chemical indices have also undergone considerable changes.

Example 5:

This is the result of an appraisal of a product of the Beijing East Suburb Wine Factory , with the participation of wine tasters affiliated to the relevant ministry:

Product: Special Grade Brandy

Untreated original brandy : The aroma and flavor were not well harmonized. The liquor has an unripe taste.

Treated brandy: the aroma was richer, the flavor was mellow.

Example 6 :

This is the result of an appraisal of a product of Hangzhou Wine Factory. The appraisal was conducted jointly by the members of the State Commission of Rice Wine Tasters and Fruit Wine Tasters , the members of the Zhejiang Provincial Commission of Wine Tasters and the wine tasters of the Hangzhou Wine Factory.

Product: Wine fermented with osmanthus flower.

Sample A: Untreated original wine.

Sample B: Wine treated with the mehtod of the present invention.

Result of appraisal:

1. Color : Sample B was deeper in color than Sample A (an indication of aged wine ) . The clearness and transparence of Sample B was slightly rising as compared with Sample A.

2. Aroma: Sample B gave off less aroma than Sample A, but the aroma of Sample B was more delicate.

3. Flavor : Sample B tastes better than Sample A in that it was more tasty, with less adulterated tastes, less pungent, the flavor became soft and mellow, well coordinated and more palatable.

4. Comments : The experiment with the treatment of this wine was essentially successful.

Experiments were also conducted on French cognacs of the V.S.O.P. and X.O. grades on sale in market (such as the 'Charme', 'Napoleon', 'Martell' Brands), and improvements were also observed after treatment.

**Claims**

1. An interfacing method for the aging of alcoholic beverages , characterized in that it increases the contact surface between the alcoholic beverage and the surface of the containing vessel to enhance the integrating effects of aging.

2. Equipment for the realization of aging of alcoholic beverages based on the interfacing method , characterized in that the equipment comprises a containing vessel of arbitrary configuration, and interfacing elements for the augmentation of the solid-liquid contact surface.

3. Intefacing method and equipment for the aging of alcoholic beverages according to Claim 1 or 2 , characterized in that the said containing vessel and interfacing elements are made of inorganic materials suitable for the container for foodstuffs , including glass, stone, ceramic, enamel, cement and metal.

4. Equipment for the aging of alcoholic beverages based on the interfacing method according to Claim 2 , characterized in that the said interfacing elements can be placed in the containing vessel or can be directly used as independent containers.

5. Equipment for the aging of alcoholic beverages according to Claim 1 or 2, characterized in that auxiliary apparatus comrpising a pump or stirrer or auxiliary measures utilizing sonic, optic, electric or magnetic effects can be incorporated.

6. Equipment for the aging of alcoholic beverages according to Claim 5, characterized in that electricity conducting electrodes can be placed in the said containing vessel for the alcoholic beverages , or the metallic parts of the said equipment can be directly used as electrodes.

QI-HAI YU

HEFEI IRON AND STEEL COMPANY

EPAA-36860.5

FIG.1

FIG. 2

FIG.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-C- 38 148 (E.J. FRASER)<br>* Claim; figures * | 1-5 | C 12 H 1/16 |
| X | US-A- 493 809 (J. BECKER)<br>* Claims 1,2; figure * | 1-6 | |
| X | DE-C- 893 332 (ERA ESTERATOR GmbH)<br>* Claims 1,2,3 * | 1-4 | |
| X | FR-A-1 031 383 (C. TOTOT)<br>* Summary; page 1, column 2, lines 7-15<br>* | 1-4 | |
| X | FR-A- 619 858 (ANCIENNE MAISON GERBAUD)<br>* Claims * | 1-4 | |
| X | US-A-2 025 674 (W.J.SCHWEITZER)<br>* Figures; claims; page 1, column 2, lines 28-42 * | 1-6 | |
| X | FR-E- 17 467 (C.A. MEYGRET)<br>* Figures; summary; page 1, lines 17-26<br>* | 1-6 | TECHNICAL FIELDS SEARCHED (Int. Cl.4)<br><br>C 12 H |
| A | FR-A- 964 295 (M.P. BUGARD)<br>* Summary; figures * | 1-5 | |

The present search report has been drawn up for all claims

| Place of search | Date of completion of the search | Examiner |
|---|---|---|
| THE HAGUE | 09-12-1988 | COUCKE A.O.M. |

EPO FORM 1503 03.82 (P0401)